# EUROPEAN PATENT APPLICATION

(11) **EP 4 734 262 A1**
(43) Date of publication of application: **29.04.2026**
(21) Application number: 25809985.2
(22) Date of filing: 24.01.2025
(51) Int. Cl.: H01M 50/383, H01M 50/342, H01M 50/249

(54) **BATTERY MODULE**

(30) Priority: 08.05.2024 KR 20240060515
(71) Applicant: LG Energy Solution, Ltd., Seoul 07335 (KR)
(72) Inventor: LEE, Jung-Hoon, Daejeon 34122 (KR); KIM, Kwang-Mo, Daejeon 34122 (KR); JUNG, Hye-Mi, Daejeon 34122 (KR); PARK, Min-Soo, Daejeon 34122 (KR)
(74) Representative: Plasseraud IP
(86) International application number: PCT/KR2025/001539
(87) International publication number: WO 2025/234564

(57) **Abstract**

Disclosed is a battery module. The battery module includes a frame having a space therein and configured to extend along a front and rear direction and have a top plate; a battery array positioned inside the frame and including a plurality of battery cells stacked along a right and left direction; and an elastic partition compressed between the battery array and the top plate and configured to extend along the front and rear direction.

## Description

### TECHNICAL FIELD

The present disclosure relates to a battery module.

The present application claims priority to Korean Patent Application No. 10-2024-0060515 filed on May 8, 2024 in the Republic of Korea, the disclosures of which are incorporated herein by reference.

### BACKGROUND ART

As the demand for portable electronic products such as smartphones, tablet PCs, and smart watches increases significantly and electric vehicles become increasingly widespread, research is actively being conducted on batteries installed the portable electronic products, especially secondary batteries that can be repeatedly charged and discharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be called a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs inside one battery module, the thermal runaway needs to be prevented from propagating to other battery modules or other battery cells. If thermal runaway propagation between battery modules or battery cells is not properly prevented, an event occurring in a specific battery module or battery cell may cause a chain thermal reaction in other battery modules or other battery cells, which may cause an explosion or fire or enlarge the scale thereof.

In particular, if an event such as thermal runaway occurs in a battery module, gas or flame may be randomly discharged to the outside. At this time, if the discharge of gas or flame is not properly controlled, gas or flame may be discharged toward another battery module, which may cause a thermal chain reaction in other battery modules. In particular, a module terminal may exist at the front side of the battery module, and a component such as a module bus bar may exist for electrical connection with another battery module or battery pack. Accordingly, if flame is discharged to the front side of the battery module, the module terminal may be damaged inside the battery pack, causing an electrical short. In addition, since another battery module may exist at the front side of the battery module, if flame is discharged to the front side of a specific battery module, the discharged flame may be directed to another battery module, which may easily cause a fire to spread between battery modules.

If the thermal propagation between battery modules or battery cells is not properly controlled, the voltage drop of the battery module or battery pack may occur rapidly. This may cause a sudden shutdown of a device equipped with the battery module or battery pack, resulting in unexpected damage. For example, if a voltage drop of the battery pack occurs suddenly while an electric vehicle is in operation, it is impossible to secure sufficient time to move the electric vehicle to a safe location.

Moreover, if a fire or explosion occurs suddenly due to failure to properly control thermal propagation between battery modules or battery cells, there is a high possibility of causing casualties to users. For example, when thermal runaway occurs in an electric vehicle, if a certain amount of time is not secured before it progresses to a full-blown fire, the occupants may not be able to escape safely.

### DISCLOSURE

### Technical Problem

The present disclosure is designed to solve the problems of the related art, and therefore the present disclosure is directed to providing a battery module having an improved structure to appropriately control the emission of flame, etc. generated inside the battery module, and a battery pack and a vehicle including the same.

The present disclosure is also directed to providing a structure that blocks a thermal event occurring inside a battery module from propagating to adjacent battery cells.

The present disclosure is also directed to providing a structure capable of smoothly discharging a venting gas generated inside a battery module.

The present disclosure is also directed to providing a structure capable of blocking a venting gas generated externally from flowing into the battery module.

However, the technical problems that the present disclosure seeks to solve are not limited to the above, and other problems not mentioned herein will be clearly understood by those skilled in the art from the following disclosure.

### Technical Solution

In one aspect of the present disclosure, there is provided a battery module comprising: a frame having a space therein and configured to extend along a front and rear direction and have a top plate; a battery array positioned inside the frame and including a plurality of battery cells stacked along a right and left direction; and an elastic partition compressed between the battery array and the top plate and configured to extend along the front and rear direction.

In addition, the elastic partition may include a bar extending along the front and rear direction; and a front guard extending along the right and left direction from a front side of the bar.

In addition, the elastic partition may further include a rear guard extending along the right and left direction from a rear side of the bar.

In addition, the elastic partition may be provided in plurality, and the plurality of elastic partitions may be arranged along the right and left direction.

In addition, the top plate may have a venting hole.

In addition, the venting hole may be located between two neighboring elastic partitions among the plurality of elastic partitions.

In addition, the venting hole may be provided in plurality, and the plurality of venting holes may be arranged along the right and left direction.

In addition, the battery module may further comprise an inner cover located between the elastic partition and the top plate.

In addition, the inner cover may have a score line.

In addition, the venting hole may expose the score line.

In addition, the score line may extend along a perimeter of the venting hole.

In addition, the inner cover may be configured to expose a portion of the battery array when a thermal event occurs.

In addition, the venting hole may be provided in plurality, and the score line may be formed in plurality to correspond to the plurality of venting holes in one-to-one relationship.

In addition, the inner cover may cover the battery array entirely.

A battery pack according to one aspect of the present disclosure includes the battery module of the present disclosure.

A vehicle according to one aspect of the present disclosure includes the battery module of the present disclosure.

### Advantageous Effects

According to at least one of the embodiments of the present disclosure, when gas or flame is generated inside the battery module, the emission of such gas or flame may be appropriately controlled.

According to at least one of the embodiments of the present disclosure, the electrical safety of a battery module may be improved.

According to at least one of the embodiments of the present disclosure, heat propagation may be suppressed.

According to at least one of the embodiments of the present disclosure, the transmission of a thermal event by a flame or gas outside the battery module may be suppressed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery module according to an embodiment of the present disclosure.
FIG. 2 is a drawing showing the battery module of FIG. 1, in which some components are exploded.
FIG. 3 is a drawing showing a battery array of FIG. 2, in which some components are exploded.
FIG. 4 is a cross-sectional view taken along the cutting line A-A' of FIG. 1.
FIG. 5 is a cross-sectional view taken along the cutting line A-A' of FIG. 1.
FIG. 6 is a drawing showing the battery module of FIG. 1, from which a top plate and an inner cover are removed.
FIG. 7 is a drawing showing a modified embodiment of FIG. 6.
FIG. 8 is a drawing showing the battery module of FIG. 1, from which the top plate is removed.
FIGS. 9 and 10 are plan views showing the battery module of FIG. 1.
FIG. 11 is a drawing showing the battery module of FIG. 1 when a thermal event occurs.
FIG. 12 is a cross-sectional view taken along the cutting line B-B' of FIG. 11.
FIG. 13 is a drawing showing a modified embodiment of section C of FIG. 1.
FIG. 14 is a drawing showing another modified embodiment of section C of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

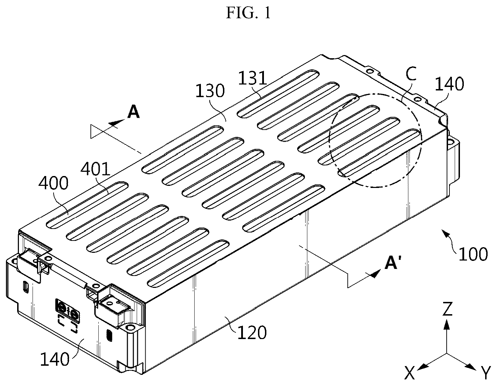

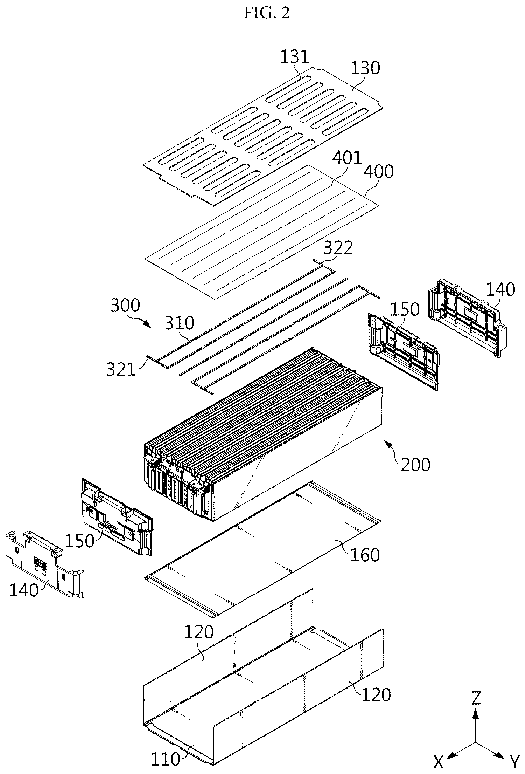

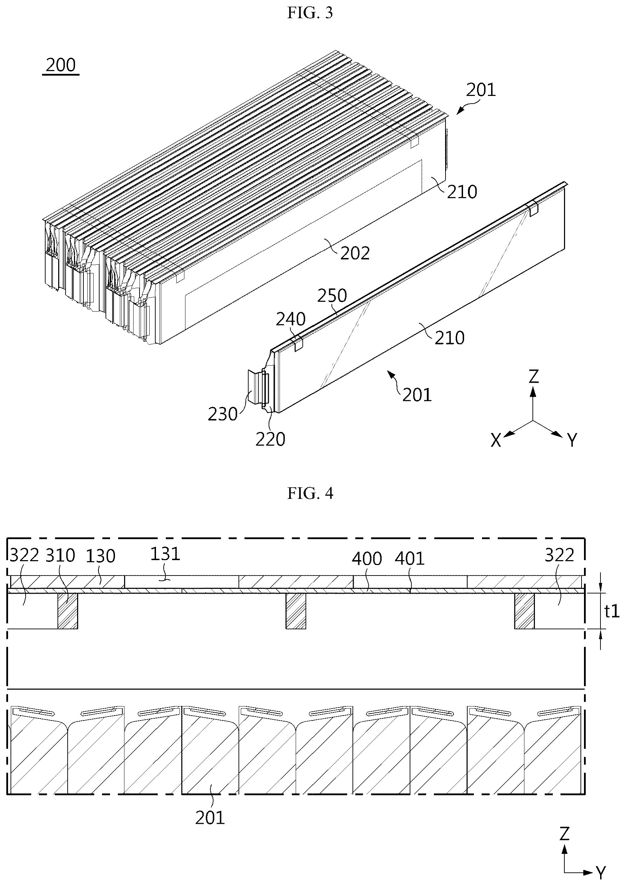

FIG. 1 is a diagram showing a battery module according to an embodiment of the present disclosure. FIG. 2 is a drawing showing the battery module of FIG. 1, in which some components are exploded. FIG. 3 is a drawing showing a battery array 200 of FIG. 2, in which some components are exploded.

Referring to FIGS. 1 to 3, the battery module according to an embodiment of the present disclosure may include a frame 100, a plurality of battery cells 201, and an elastic partition 300.

The frame 100 may have a rectangular parallelepiped shape. The frame 100 may also be referred to as a case 100. The frame 100 may provide a space therein. In addition, the frame 100 may be extended long along the front and rear direction or the X-axis direction. The frame 100 may have a top plate 130, a bottom plate 110, and a pair of side plates 120. In addition, the frame 100 may have a shape in which the front surface and the rear surface are open. The top plate 130 and the bottom plate 110 may be arranged to face each other. The pair of side plates 120 may connect the top plate 130 and the bottom plate 110.

The bottom plate 110 and the pair of side plates 120 may be formed integrally. At this time, the bottom plate 110 and the pair of side plates 120 may be referred to as a lower frame 100 or a U-frame 100. The top plate 130 may be fastened, coupled, assembled, attached, or fixed to the lower frame 100 or the U-frame 100. For example, the top plate 130 may be coupled to the lower frame 100 or the U-frame 100 by welding.

The battery cell 201 may be provided in plurality. The plurality of battery cells 201 may constitute a battery array 200. The battery array 200 may be located inside the frame 100. Also, the battery array 200 may be located on the upper surface of the bottom plate 110.

Each battery cell 201 may extend along the front and rear direction or the X-axis direction. The plurality of battery cells 201 may be stacked in the right and left direction or the Y-axis direction. At this time, the battery cell 201 may mean a secondary battery. The battery cell 201 may include an accommodation portion 210 accommodating an electrode assembly and an electrolyte. In addition, the battery cell 201 may include a first sealing portion 220 extending in the front and rear direction of the accommodation portion 210. In addition, the battery cell 201 may include a second sealing portion 240 extending to the upper side of the accommodation portion 210. The electrode leads 230 of the battery cell 201 may protrude to the front and rear sides of the first sealing portion 220, respectively. In particular, the battery cell 201 may be a pouch-type secondary battery. Each battery cell 201 may extend along the front and rear direction or the X-axis direction. The electrode lead 230 may protrude forward and backward from each battery cell 201. However, the shape of the battery cell 201 is not limited to a pouch shape and may have various shapes such as a cylindrical shape or a rectangular parallelepiped shape.

The battery array 200 may include a first adhesive member 202 positioned between the battery cells 201. The first adhesive member 202 may fix an adjacent battery cell 201. The battery cell 201 may include a second adhesive member 250. The second adhesive member 250 may fold and fix the second sealing portion 240 toward the accommodation portion 210.

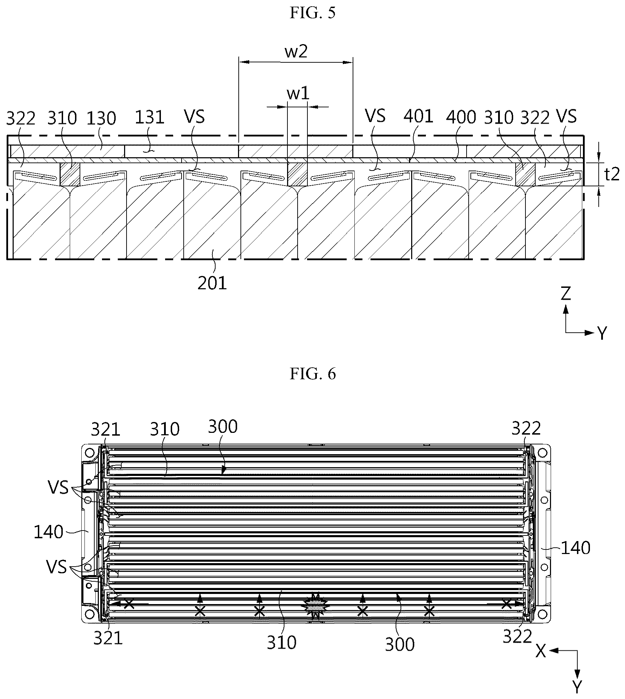

The space between the plurality of battery cells 201 and the top plate 130 or the space between the battery array 200 and the top plate 130 may be referred to as a venting space VS (see FIG. 5).

The elastic partition 300 may be positioned between the plurality of battery cells 201 or the battery array 200 and the top plate 130. The elastic partition 300 may have a shape that extends long along the front and rear direction or the X-axis direction. The elastic partition 300 may partition the space between the plurality of battery cells 201 or the battery array 200 and the top plate 130. In addition, the elastic partition 300 may be compressed or fixed between the plurality of battery cells 201 or the battery array 200 and the top plate 130. In addition, the elastic partition 300 may be attached to the upper surface of the battery array 200. The elastic partition 300 may be in contact with the second sealing portion 240 or the second adhesive member 250. In addition, the elastic partition 300 may be attached to the lower surface of the top plate 130.

The elastic partition 300 may contain a material having elasticity. For example, the elastic partition 300 may contain a polyurethane material. Also, the elastic partition 300 may contain a silicone material.

According to this configuration of the present disclosure, the thermal safety of the battery module may be improved. When a thermal event occurs from the battery cell 201, the venting gas g may be discharged into the venting space VS. At this time, the elastic partition 300 may block the venting gas g from moving to another adjacent venting space VS by partitioning the venting space VS. As a result, the heat propagation inside the battery module may be suppressed.

Referring to FIGS. 1 to 3, the battery module according to an embodiment of the present disclosure may include a bus bar frame assembly 150, a heat transfer member 160, and an end cover 140.

The bus bar frame assembly 150 may be provided at the front and rear sides of the plurality of battery cells 201, respectively. The bus bar frame assembly 150 may be electrically connected to the electrode leads 230 of the plurality of battery cells 201.

The heat transfer member 160 may be arranged below the plurality of battery cells 201 or the battery array 200. Also, the heat transfer member 160 may be arranged between the bottom plate 110 and the plurality of battery cells 201 or the battery array 200. The heat transfer member 160 may contain a material having high thermal conductivity. For example, the heat transfer member 160 may be a resin. Also, the heat transfer member may fix the plurality of battery cells 201 or the battery array 200.

The pair of end covers 140 may be coupled to the front and rear sides of the frame 100, respectively. The pair of end covers 140 may cover the front surface and the rear surface of the frame 100. The end covers 140 may have a rectangular shape.

FIG. 4 is a cross-sectional view taken along the cutting line A-A' of FIG. 1. FIG. 5 is a cross-sectional view taken along the cutting line A-A' of FIG. 1.

Referring to FIGS. 4 and 5, the battery array 200 may be disposed on the lower frame 100 or the U-frame 100 of the battery module according to an embodiment of the present disclosure, and the elastic partition 300 may be disposed on the battery array 200. In addition, the elastic partition 300 may be compressed and installed by coupling the top plate 130 to the lower frame 100 or the U-frame 100. The thickness (t1) of the elastic partition 300 before installation may be greater than the thickness (t2) after installation.

According to this configuration of the present disclosure, the elastic partition 300 may more reliably block the venting gas g from moving to another adjacent venting space VS.

FIG. 6 is a drawing showing the battery module of FIG. 1, from which a top plate 130 and an inner cover 400 are removed.

Referring to FIGS. 5 and 6, the elastic partition 300 of the battery module according to an embodiment of the present disclosure may be provided in plurality. The plurality of elastic partitions 300 may be arranged along the right and left direction or the Y-axis direction. The plurality of elastic partitions 300 may partition the venting space VS into a plurality of spaces. For example, the elastic partitions 300 may be arranged so that one venting space VS corresponds to every four battery cells 201.

According to this configuration of the present disclosure, the thermal safety of the battery module may be improved. The elastic partition 300 may further limit the movement range of the venting gas g by partitioning the venting space VS into a plurality of spaces. As a result, the heat propagation inside the battery module may be more reliably suppressed.

Referring to FIGS. 5 and 6, the elastic partition 300 of the battery module according to an embodiment of the present disclosure may include a bar 310 and a front guard 321. The bar 310 may extend long along the front and rear direction or the X-axis direction. Also, the front guard 321 may extend from the front side of the bar 310 along the right and left direction or the Y-axis direction. Alternatively, the front guard 321 may extend from the front end of the bar 310 along the right and left direction or the Y-axis direction. The bar 310 and the front guard 321 may be formed integrally. The front guards 321 of at least some among the plurality of elastic partitions 300 may extend along the left direction or the -Y-axis direction. Furthermore, the front guard 321 of at least some among the plurality of elastic partitions 300 may extend along the right direction or the +Y-axis direction.

According to this configuration of the present disclosure, the movement of the venting gas g may be further restricted. The front guard 321 may block the venting gas g from propagating through the front space of the accommodation portion 210. As a result, the heat propagation inside the battery module may be more reliably suppressed.

Referring to FIGS. 5 and 6, the elastic partition 300 of the battery module according to an embodiment of the present disclosure may include a rear guard 322. The rear guard 322 may extend from the rear side of the bar 310 along the right and left direction or the Y-axis direction. Alternatively, the rear guard 322 may extend from the rear end of the bar 310 along the right and left direction or the Y-axis direction. The bar 310 and the rear guard 322 may be formed integrally. The rear guard 322 of at least some among the plurality of elastic partitions 300 may extend along the left direction or the -Y-axis direction. Also, the rear guard 322 of at least some among the plurality of elastic partitions 300 may extend along the right direction or the +Y-axis direction. Also, the front guard 321 and the rear guard 322 may extend along the same direction. Also, the front guard 321 and the rear guard 322 may be arranged to face each other.

According to this configuration of the present disclosure, the movement of the venting gas g may be further restricted. The rear guard 322 may block the venting gas g from propagating through the rear space of the accommodation portion 210. As a result, the heat propagation inside the battery module may be more reliably suppressed.

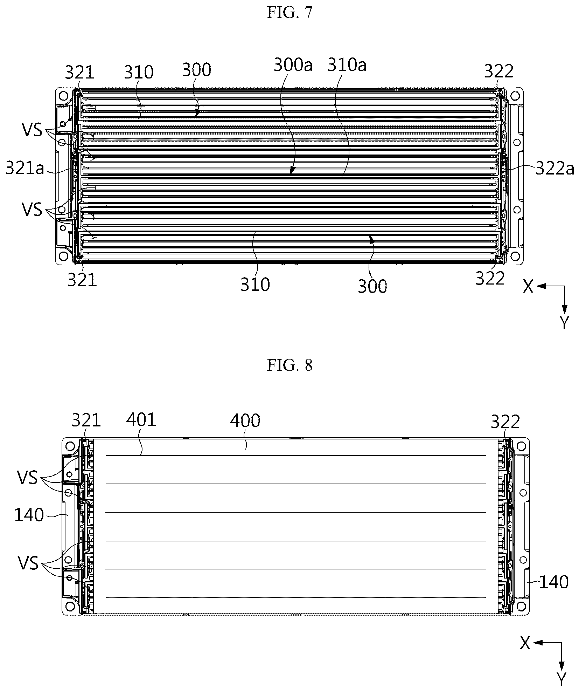

FIG. 7 is a drawing showing a modified embodiment of FIG. 6.

Referring to FIG. 7, the elastic partition 300a located in the middle among the plurality of elastic partitions 300, 300a of the battery module according to an embodiment of the present disclosure may include a bar 310a, a front guard 321a, and a rear guard 322a. The front guard 321a may extend from the front end of the bar 310a along the left direction and the right direction. Alternatively, the front guard 321a may extend from the front end of the bar 310a along the +Y-axis direction and the -Y-axis direction. The rear guard 322a may extend from the rear end of the bar 310a along the left direction and the right direction. Alternatively, the rear guard 322a may extend from the rear end of the bar 310a along the +Y-axis direction and the -Y-axis direction.

According to this configuration of the present disclosure, the movement of the venting gas g may be further restricted. The front guard 321a may block the venting gas g from propagating through the front space of the accommodation portion 210. As a result, the heat propagation inside the battery module may be more reliably suppressed.

In addition, according to this configuration of the present disclosure, the movement of the venting gas g may be further restricted. The rear guard 322a may block the venting gas g from propagating through the rear space of the accommodation portion 210. As a result, the heat propagation inside the battery module may be more reliably suppressed.

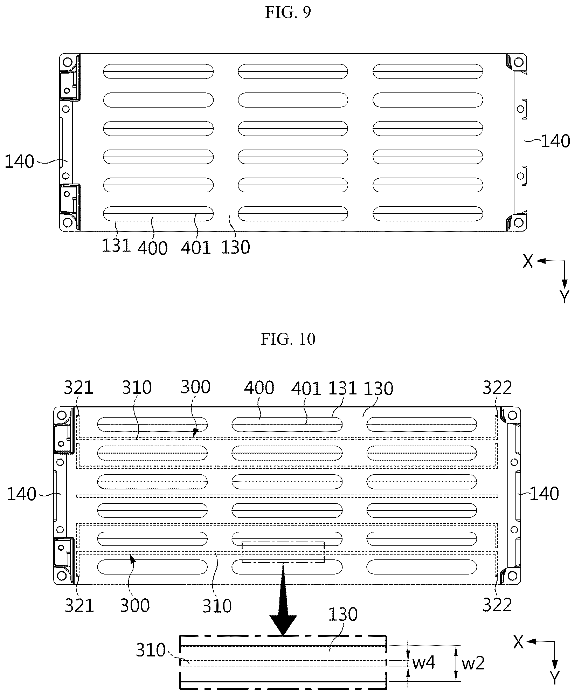

FIG. 8 is a drawing showing the battery module of FIG. 1, from which the top plate 130 is removed. FIGS. 9 and 10 are plan views showing the battery module of FIG. 1. Referring to FIGS. 5 to 10, the top plate 130 according to an embodiment of the present disclosure may have a venting hole 131.

According to this configuration of the present disclosure, the thermal safety of the battery module may be improved. The venting gas g discharged into the venting space VS may be discharged to the outside of the battery module through the venting hole 131. As a result, heat propagation inside the battery module may be suppressed.

Referring to FIGS. 5 to 10, the battery module according to an embodiment of the present disclosure may further include an inner cover 400. The inner cover 400 may be positioned between the elastic partition 300 and the top plate 130. The battery module may optionally include the inner cover 400. The inner cover 400 may have a plate shape or a sheet shape. The inner cover 400 may contain a material having high fire resistance. In addition, the inner cover 400 may contain a material having high insulation properties. In addition, the inner cover 400 may contain a material having low elasticity.

According to this configuration of the present disclosure, the thermal safety of the battery module may be improved. When a thermal event occurs inside the battery module, the inner cover 400 may be ruptured or damaged. As a result, the venting gas g may be discharged to the outside of the battery module through the venting hole 131. Meanwhile, when the battery module is exposed to high-temperature gas generated from the outside, the inner cover 400 may block the high-temperature gas from flowing into the battery module by blocking the venting hole 131.

Referring to FIGS. 5 to 10, the inner cover 400 of the battery module according to an embodiment of the present disclosure may have a score line 401. The score line 401 may be used as a term that includes and collectively refers to a perforated line 401, a notching line 401, a cutting line 401, a shredding line 401, a tear line 401, or a separation line 401. The score line 401 may be configured to be easily separated by pressure applied to the inner cover 400.

According to this configuration of the present disclosure, the thermal safety of the battery module may be improved. When a thermal event occurs from the battery cell 201, the score line 401 may be separated to communicate the venting space VS and the venting hole 131. As a result, the venting gas g may be discharged to the outside of the battery module through the venting hole 131. By smoothly discharging the venting gas g, the heat propagation inside the battery module may be suppressed.

Referring to FIGS. 5 to 10, the inner cover 400 of the battery module according to an embodiment of the present disclosure may entirely cover the plurality of battery cells 201 or the battery array 200. In addition, the score line 401 of the inner cover 400 may be provided in plurality. Each of the plurality of venting spaces VS may correspond to at least one score line 401.

According to this configuration of the present disclosure, the inner cover 400 may completely block high-temperature gas from flowing into the battery module. In addition, the inner cover 400 may smoothly discharge the venting gas g even if a thermal event occurs in any venting space VS among the plurality of venting spaces VS.

Referring to FIGS. 5 to 10, the venting hole 131 of the battery module according to an embodiment of the present disclosure may be provided in plurality. The plurality of venting holes 131 may be arranged along the right and left direction or the Y-axis direction. In addition, the plurality of venting holes 131 may be arranged along the front and rear direction or the X-axis direction. Each of the plurality of venting spaces VS may correspond to at least one venting hole 131.

According to this configuration of the present disclosure, when a thermal event occurs in one venting space VS among the plurality of venting spaces VS, the venting gas g may separate the score line 401 corresponding to the venting space VS and be discharged to the outside of the battery module through the venting hole 131 corresponding to the venting space VS.

Referring to FIGS. 5 to 10, at least some venting holes 131 among the plurality of venting holes 131 of the battery module according to an embodiment of the present disclosure may be located between two neighboring elastic partitions 300. The venting holes 131 may be located to correspond to the venting space VS.

According to this configuration of the present disclosure, when a thermal event occurs in one venting space VS among the plurality of venting spaces VS, the venting gas g may separate the score line 401 corresponding to the venting space VS and be discharged to the outside of the battery module through the venting hole 131 corresponding to the venting space VS.

Referring to FIGS. 5 to 10, the venting hole 131 of the battery module according to an embodiment of the present disclosure may expose the score line 401. The plurality of venting holes 131 may expose the score line 401, respectively. For example, the score line 401 may be formed as a plurality of straight lines. Also, each straight line-shaped score line 401 may be exposed by the plurality of venting holes 131.

According to this configuration of the present disclosure, when a thermal event occurs, the venting gas g may be discharged easily.

Referring to FIGS. 5 to 10, a width (W1) of the bar 310 of the elastic partition 300 of the battery module according to an embodiment of the present disclosure in the right and left direction or Y-axis direction may be formed to be equal to or smaller than a spacing (W2) of adjacent venting holes 131 in the right and left direction or Y-axis direction.

According to this configuration of the present disclosure, the elastic partition 300 may not disturb the flow of the venting gas g that is discharged through the venting hole 131.

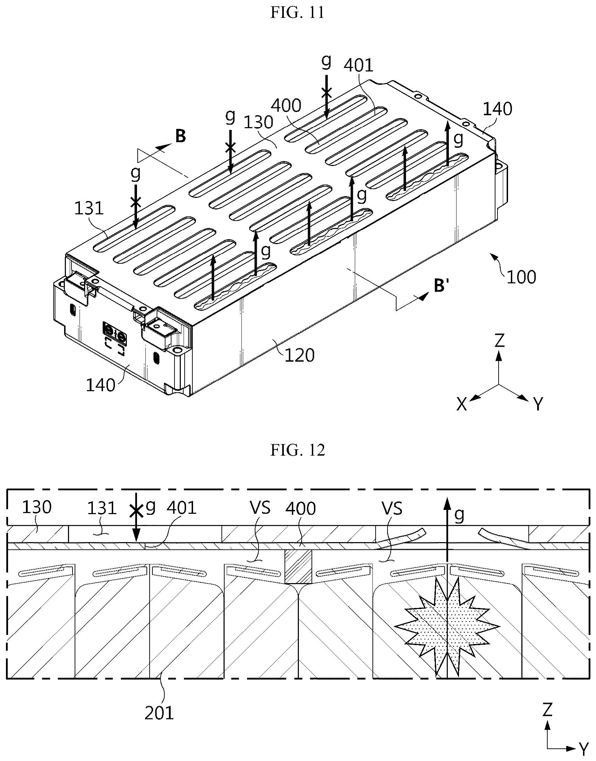

FIG. 11 is a drawing showing the battery module of FIG. 1 when a thermal event occurs. FIG. 12 is a cross-sectional view taken along the cutting line B-B' of FIG. 11.

Referring to FIGS. 11 and 12, when a thermal event occurs from the battery module according to an embodiment of the present disclosure, the venting gas g may separate the score line 401. As a result, the inner cover 400 may expose a portion of the plurality of battery cells 201 or a portion of the battery array 200 to the outside. In addition, the inner cover 400 may communicate the venting space VS and the venting hole 131.

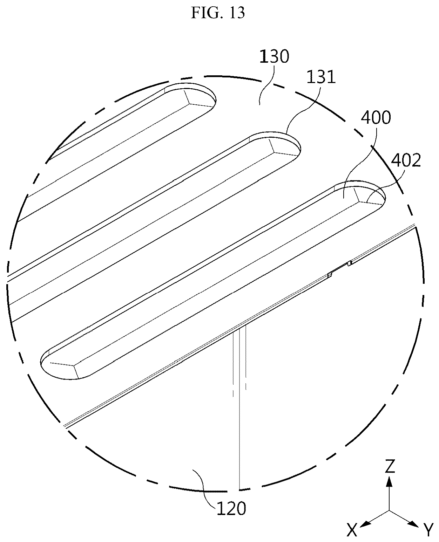

FIG. 13 is a drawing showing a modified embodiment of section C of FIG. 1. Referring to FIGS. 1 and 13, the score line 402 may be provided in plurality. In addition, the plurality of score lines 402 may be formed to correspond to the plurality of venting holes 131 in one-to-one relationship. Also, each venting hole 131 may expose the score line 402. In this case, the score line 402 may have a fish bone shape.

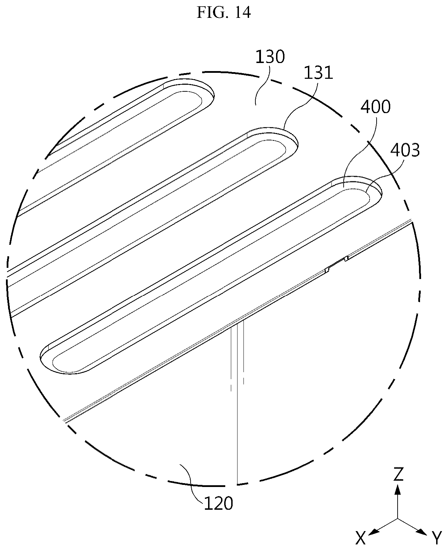

FIG. 14 is a drawing showing another modified embodiment of section C of FIG. 1. Referring to FIGS. 1 and 14, the score line 403 may be provided in plurality. In addition, the plurality of score lines 403 may be formed to correspond to the plurality of venting holes 131 in one-to-one relationship. Also, each venting hole 131 may expose the score line 403. At this time, the score line 403 may have a circular shape or an oval shape.

The battery pack according to the present disclosure may include one or more battery modules according to the present disclosure. For example, the battery pack according to the present disclosure may be configured to include a pack housing, so that a plurality of battery modules according to the present disclosure are accommodated inside the pack housing. In this case, when the battery module according to the present disclosure is accommodated, the effect of preventing heat propagation between battery modules is excellent in an emergency situation such as thermal runaway, and sufficient time for a user to respond or escape may be secured.

In addition, the battery pack according to the present disclosure may further include various components other than the battery module, such as various battery pack components known at the time of filing of this application, such as a BMS, a bus bar, a relay, a current sensor, etc.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in the vehicle in addition to the battery module or the battery pack. For example, the vehicle according to the present disclosure may further include a vehicle body, a motor, a control device such as an ECU (electronic control unit), in addition to the battery module 200 according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
a frame having a space therein and configured to extend along a front and rear direction and have a top plate;
a battery array positioned inside the frame and including a plurality of battery cells stacked along a right and left direction; and
an elastic partition compressed between the battery array and the top plate and configured to extend along the front and rear direction.

2. The battery module according to claim 1,
wherein the elastic partition includes:
a bar extending along the front and rear direction; and
a front guard extending along the right and left direction from a front side of the bar.

3. The battery module according to claim 2,
wherein the elastic partition further includes a rear guard extending along the right and left direction from a rear side of the bar.

4. The battery module according to claim 1,
wherein the elastic partition is provided in plurality, and
wherein the plurality of elastic partitions are arranged along the right and left direction.

5. The battery module according to claim 4,
wherein the top plate has a venting hole.

6. The battery module according to claim 5,
wherein the venting hole is located between two neighboring elastic partitions among the plurality of elastic partitions.

7. The battery module according to claim 5,
wherein the venting hole is provided in plurality, and
wherein the plurality of venting holes are arranged along the right and left direction.

8. The battery module according to claim 5, further comprising:
an inner cover located between the elastic partition and the top plate.

9. The battery module according to claim 8,
wherein the inner cover has a score line.

10. The battery module according to claim 9,
wherein the venting hole exposes the score line.

11. The battery module according to claim 10,
wherein the score line extends along a perimeter of the venting hole.

12. The battery module according to claim 9,
wherein the inner cover is configured to expose a portion of the battery array when a thermal event occurs.

13. The battery module according to claim 9,
wherein the venting hole is provided in plurality, and
wherein the score line is formed in plurality to correspond to the plurality of venting holes in one-to-one relationship.

14. The battery module according to claim 8,
wherein the inner cover covers the battery array entirely.

15. A battery pack comprising the battery module according to any one of claims 1 to 14.

16. A vehicle comprising the battery module according to any one of claims 1 to 14.
